# EUROPEAN PATENT APPLICATION

(11) **EP 0 858 884 A2**
(43) Date of publication of application: **19.08.1998**
(21) Application number: 97121781.5
(22) Date of filing: 10.12.1997
(51) Int. Cl.: B32B 27/18, D06N 7/00, A41D 31/02

(54) **Antistatic textile material**

(30) Priority: 18.12.1996 JP 354125/96
(71) Applicant: JAPAN GORE-TEX, INC., Setagaya-ku Tokyo-To 156 (JP)
(72) Inventor: Nozaki, Yuuichirou, Okayama-Shi, Okayama-Ken 700 (JP); Kato, Norimasa, Okayama-Shi, Okayama-Ken 703 (JP); Kitaura, Katashi, Wake-Gun, Okayama-Ken 709-02 (JP)
(74) Representative: Kador & Partner

(57) **Abstract**

A clothing material with a porous structure having a conductive layer that is waterproof, has excellent antistatic properties, and has greater strength, is provided.

The clothing material has a base layer A consisting of a porous polytetrafluoroethylene resin; a conductive layer B consisting of a conductive substance-containing porous polytetrafluoroethylene resin formed on at least one side of said base layer; and a resin layer C formed on said conductive layer.

## Description

### FIELD OF THE INVENTION

This invention relates to material having static dissipation properties, for use in fabrics and clothing.

### BACKGROUND OF THE INVENTION

Clothing which has antistatic properties is desirable for wear, especially around locations where fire could ignite by static electricity, such as gasoline stations and the like.

Japanese Laid Open Utility Model Application No. 59-155125 describes a conductive porous polytetrafluoroethylene (PTFE) laminated to a fibrous fabric. The porous PTFE film is made conductive by the presence of a conductive material such as carbon particles. However, the product is brittle, resulting in tearing of the conductive layer, and the loss of antistatic properties.

Japanese Laid Open Utility Model Application No. 61-180119 teaches a coating layer of a resin containing conductive particles, which is on a porous expanded PTFE (ePTFE) film. A fabric base layer is present. The resin is not identified. Because of presence of the conductive particles, the ePTFE layer tends to have pinholes.

### SUMMARY OF THE INVENTION

To overcome these deficiencies, a layer of unfilled ePTFE is employed along with a layer of filled ePTFE.

More specifically, a layer of expanded porous PTFE containing a conductive substance (layer B) is laminated on one side to a base layer A of expanded porous PTFE that does not contain any conductive substance, and on the other side is coated with a continuous non-pore-containing plastic resin layer (layer C) that is resistant to liquid water but which allows water vapor to pass through. The two layers on either side of the PTFE that contains a conductive substance provide both a means for preventing the conductive substance from separating out of the PTFE and provide double protection against penetration by liquid water.

### DETAILED DESCRIPTION OF THE INVENTION

Layers A and B are comprised of porous PTFE. Layer A does not contain any conductive filler substance; layer B does. Expanded porous PTFE is a known material and is described in US Patent 3,953,566. It is liquid water repelling, but allows water vapor, such as perspiration, to pass through. It has a morphology comprising a microstructure of nodes interconnected by fibrils..

The clothing material of the present invention has a base layer A consisting of porous polytetraftuoroethylene (PTFE) resin sheet. The base layer A is 5 to 100 µm, and preferably 25 to 60 µm thick, with a porosity of 65 to 85 %, and preferably 76 to 80 %. The mean pore size, as determined with a Coulter porometer by Coulter Electronics, is 0.16 to 1 µm, and preferably 0.15 to 0.3 µm. The base layer provides strength, and is liquid waterproof and water vapor permeable.

The clothing material of the present invention has a conductive layer B consisting of a porous expanded PTFE (ePTFE) that contains a conductive substance. The conductive substance primarily is contained in or adheres to the nodes of the ePTFE, which as stated above has a porous microstructure consisting of nodes and fibrils. Various conductive substances can be used, examples of which include carbon powder (such as carbon black, graphite, and activated carbon), carbon fibers, metal powders, metal fibers, titanium oxide, copper sulfide, tin oxide, and mixtures thereof. The mean particle size of the conductive substance is preferably no more than 5 µm, and preferably no more than 3 um, with no particular restrictions on the minimum value. The content of the conductive substance in the conductive layer is determined by taking into count the necessary antistatic properties, or the strength and the like of the substance. The use of a carbon powder with mean particle size of 0.05 to 0.3 µm is preferred in the present invention. The content in the conductive layer is 1 to 50 wt%. and preferably 7 to 20 wt% of the total weight.

Conductive layer B endows the clothing material with antistatic properties. Conductive layer B is 3 to 80 µm, and preferably 5 to 30 µm, thick. The ratio of thickness with respect to the base layer is 0.05 to 10, and preferably 0.05 to 1. The porosity of the conductive layer can be the same as, or greater than, that of the base layer, and the mean pore size can be the same as, or greater than, that of the base layer. The conductive layer is water vapor permeable because of the porous structure.

The clothing material of the present invention has a resin layer C. Resin layer C is formed as a continuous nonporous coating on the conductive layer. This prevents the conductive substance from falling out of the conductive layer. Part of the resin of the resin layer should penetrate into the porous conductive layer. This can result in a conductive layer with better mechanical strength and can resolve problems such as the partial separation or tearing of the conductive layer which becomes brittle when the conductive substance is mixed in. Part of the resin layer should also penetrate through the conductive layer into the base layer. This dramatically improves the mechanical strength of the conductive layer, and produces a structure in which the base layer and conductive layer are integrally bonded, thereby dramatically improving the peel strength between the base layer and conductive layer. In this case, the resin contained in the base layer may penetrate in the thicknesswise direction into part or all of the base layer.

The resin layer is formed as a continuous nonporous coating on the conductive layer. The thickness of the continuous coating is 1 to 20 µm, and preferably 2 to 6 µm, in terms of the thickness of the coating formed on the conductive layer not including the impregnated portions. The ratio of thickness to the base layer is 0.01 to 2, and preferably 0.05 to 0.1. The continuous coating has the function of preserving the liquid waterproofness of the clothing material. even when the base layer may lose waterproofness as a result of contamination by detergent surfactants, perspiration, or the like. The resin layer C can be liquid waterproof but water vapor permeable. The same resin C can also be present on the surface of the base layer if desired. This allows the mechanical strength of the base layer A to be improved and also has the effect of improving the waterproofness and the like of base layer A.

The clothing material of the present invention can also have a fabric on at least one surface. Examples of fabrics for such cases include woven, nonwoven, knitted, and other such fabrics consisting of nylon, polyesters, or the like, depending on the type of intended clothing.

Porous PTFE sheet A and conductive substance-containing porous PTFE sheet B are first prepared. Sheet A can be obtained by adding and mixing a liquid lubricant (such as solvent naphtha or white oil) to a fine powder (crystallinity of at least 95 %) a polytetrafluoroethylene resin (PTFE) and extrusive molding the resulting mixture using an extruder by a common method. In this case, the content of the lubricant in the mixture is 12 to 25 wt%, and preferably 15 to 20 wt%. The mean particle diameter of the PTFE fine powder is 400 to 700 µm and preferably 450 to 550 µm. The extrusion temperature is 22-70°C, and preferably 25 to 50°C. Sheet A is 0.1 to 5 mm, and preferably 0.3 to 1 mm, thick. Sheet B can be obtained by using an extruder for the extrusion molding of a mixture of a lubricant and a PTFE fine powder containing a conductive substance. Sheet B is 0.1 to 5 mm, and preferably 0.6 to 1.5 mm, thick.

The mixture is obtained by mixing a PTFE dispersion with Ketjenblack carbon black particles in water and agitating the mixture. The mixture is cocoagulated. The water is removed. The resultant product is cooled and the mixture thus obtained is pulverized.

Sheet B is then superposed on one or both sides of sheet A and calendered thereon. In this case, the sheets can be calendered by roll calendering, 3 to 10 times. The calendering temperature is 20 to 70°C, and preferably 30 to 50°C. The increased length of the sheets in the calendering is 1.5 to 10 times, and preferably 3 to 5 times. Sheet A of the laminated sheet following calendering is 0.05 to 2 mm, and preferably 0.2 to 1 mm, thick, while sheet B is 0.05 to 2 mm, and preferably 0.05 to 0.3 mm, thick. The ratio of the thickness of sheet B to sheet A is 0.1 to 1.3, and preferably 0.2 to 0.5.

The calendered sheet laminate is then heated to a temperature at or beyond the boiling point of the lubricant, for example, 200 to 260°C, so that the lubricant is evaporated off, and the laminate is then drawn. The drawing treatment involves the use of a common device for drawing sheets, either uniaxially or biaxially, at a temperature that is about 20 to 150°C, and preferably about 20 to 30°C, lower than the melting point of the PTFE. In this case, the drawing rate is at least 10%/second, and preferably 100 to 1000%/second, while the draw ratio is 1 to 50 times, and preferably 9 to 15 times. The drawn product is heated at a temperature of 327 to 380°C to fix the structure. The resulting drawn laminate is a laminated sheet consisting of a base layer A and conductive layer B.

Holes in the form of pinholes or tears are sometimes produced by the tension during the drawing in the conductive layer of the laminated sheet, but the proportion of the total hole surface area to the total conductive layer surface area should be within 0 to 10%, and preferably 0 to 5%. Holes can be prevented from forming in the conductive layer by increasing the thickness of the conductive layer or by decreasing the number of calenderings, normally to no more than twice, when sheets A and B are calendered.

A coating solution containing resin C is then applied and dried on the surface of the conductive layer B of the drawn sheet laminate.

Various well-known resins such as polyester and polyamide may be used as the resin, although the use of a water vapor permeable resin is preferred. Such water vapor permeable resins include thermosetting resins or thermoplastic resins containing hydrophilic groups such as amino groups, sulfonic acid groups, carboxyl groups, and hydroxyl groups. Examples of water vapor-permeable resins include polyurethane, polyfluorosulfonic acid resins, polyvinyl alcohols, cellulose acetate, cellulose nitrate, polyamino acid, hydrophilic fluoropolymers, and silicone resins. Resins or their prepolymers which have been dissolved or dispersed in an organic solvent or aqueous solvent can be used as the coating solution. The aforementioned resin used as a film forming component in the present invention should be a setting or cross-linking water vapor-permeable resin or prepolymer thereof. When a coating, solution containing such a resin and a curing agent for it if needed is used, the solution is applied onto the conductive layer and is then cured by heat or the like. This allows a cured resin to be formed. Such a cured product has better physical properties such as liquid water resistance and mechanical strength. The use of a water vapor permeable, liquid water impermeable polyurethane resin-based coating composition is particularly preferred in the present invention. The coating solution can be a thermosetting material consisting of a curing agent and a polyurethane prepolymer obtained by a reaction between a polyol and a polyisocyanate. In this case, a polyoxyethylene glycol, a polyoxyalkylene polyol, or the like may be used as the polyol. Diols or diamines may be used as the curing agent. A moisture curing type of polyurethane resin can also be used.

When the resin coating solution is applied onto the conductive layer of the drawn sheet laminate, part of the coating solution reaches the interior of the conductive layer or passes through the conductive layer into the interior of the base layer because of the porous structure of both the conductive and base layers, resulting in the impregnation of the conductive layer or both the conductive and base layers by the coating solution. After the coating solution had been applied, it is dried. When the coating solution contains a solvent, the solvent is evaporated off. The composition of the conductive layer is thus strengthened, the conductive layer and base layer are firmly bonded by the resin, and a continuous resin coating is formed on the surface of the conductive layer. The resin coating, can also be formed on the conductive layer by laminating a resin film using a lamination method.

A fabric can be laminated and fixed to one or both sides of the clothing material pertaining to the present invention. The fabric can be laminated and fixed by an adhesion method using an adhesive, a fusion method featuring a heat treatment, a sewing- method, or the like. When adhesion is adopted using an adhesive, the adhesion should be managed using an adhesive consisting of a moisture permeable resin, a non-continuous layer of adhesive, such as a pattern of discrete dots, or nonwoven web, or the like, or partial adhesion so as to prevent the material from losing moisture permeability because of the adhesive. A noncontinuous fusion method is also preferred when the materials are laminated by fusion. To prevent rain water from penetrating the sewing holes when sewing is adopted, waterproof seam tape should be applied at those parts.

The clothing material pertaining to the present invention has good antistatic properties and waterproofness, as well as good wind resistance, stain resistance, and durability. The use of a water vapor-permeable resin layer as the resin layer allows clothing material with excellent liquid waterproofness, but with water vapor permeability, to be obtained.

The conductive layer is strengthened by presence of the resin layer in the clothing, material and the base layer A and conductive layer B firmly adhere to each other, thereby preventing the conductive layer from easily breaking- or separating during use or from readily separating from the base layer.

The clothing material pertaining- to the present invention may be used to advantage as clothing material employed in locations where there is a dander of fire caused by static electricity.

The present invention is described with reference to practical examples below.

### Practical Example 1

30 weight parts solvent naphtha was mixed as a liquid lubricant per 100 weight parts PTFE fine powder, and a PTFE sheet (sheet A) 0.63 mm thick was then obtained by ram extrusion.

Separately from this, a carbon black-containing PTFE resin was obtained by mixing 12 wt% carbon black (trade name: Ketjenblack, by Lion Aguzo) having a mean particle diameter of 3 um as the conductive material with a PTFE dispersion and then coprecipitating the materials. 50 weight parts of the same solvent naphtha as that used to manufacture sheet A was mixed as a liquid lubricant per 100 weight parts resin, and a 0.68 mm thick P'FFE sheet containing carbon black was then obtained by ram extrusion. The sheet was then calendered to form sheet B with a thickness of 0.2 mm.

Sheets A and B were then superposed and calendered twice to obtain a laminated sheet 0.33 mm in thickness. Sheet A of the calendered sheet was 0.26 mm thick, and sheet B was 0.07 mm thick.

The resulting laminated sheet was heated to 200°C to remove the liquid lubricant, then preheated to 260°C, drawn in the widthwise direction at a drawing rate of 100%/sec and a draw ratio of 5 times, and then sintered at 375°C to obtain a laminated sheet having a porous structure.

A solution containing a water vapor permeable polyurethane prepolymer (tradename: Hypol FHP3000, by Hampshire Chemical Corporation) as water vapor-permeable resin C and a diamine-based curing agent was then applied to the sheet B side of the laminated sheet so that some of it impregnated the laminated sheet, and the laminate was then heated to 200°C to cure the prepolymer, resulting in the antistatic clothing material pertaining to the present invention. An electron micrograph of a cross section of the material revealed that part of the water vapor-permeable resin C had penetrated through the sheet B into the sheet A in the thicknesswise direction.

A small number of pinholes were found at various points in the conductive layer of the resulting laminated sheet. The thickness of the conductive layer and of the base layer at seven points (points a through g) on the surface was measured. The results are ,given in Table 1.

**Table 1**

| Measuring point | Base layer thickness A (µm) | Conductive layer thickness B (µm) | B/A |
|---|---|---|---|
| a | 35 | 10 | 0.3 |
| b | 35 | 15 | 0.4 |
| c | 25 | 10 | 0.4 |
| d | 20 | 5 | 0.3 |
| e | 30 | 15 | 0.4 |
| f | 40 | 15 | 0.5 |
| g | 30 | 10 | 0.3 |

There was substantial adhesive strength between the base A and conductive layer B of the laminated sheet, with a peel strength of 600 g/3 cm when the conductive layer was peeled from the base layer. The friction electrostatic charge of the laminated sheet, as determined by JIS L 1094, was 3 µC/m2, indicating, good antistatic properties.

The aforementioned peel strength was measured in the following manner.

3 cm wide adhesive tape (M442 masking tape by Nashua) was applied to the surface of the conductive layer of laminated sheet samples, and the tape was then pulled back 180 degrees at a rate of 200 mm/min. The strength needed to separate the conductive layer was used as the peel strength (g/3 cm).

### Practical Example 2

The procedure was the same as in Practical Example 1 except that a 0.69 mm thick PTFE sheet was used as sheet A, a 0.3 mm thick PTFE sheet containing carbon black was used as sheet B, and the thickness of the laminate of sheets A and B following calendering (two times) was 0.325 mm.

Essentially no pinholes were found in the conductive layer of the resulting laminated sheet. Part of the water vapor-permeable resin was found to have penetrated through sheet B into sheet A in the thicknesswise direction.

The thickness of the conductive layer and of the base layer at six points (points a through f) on the surface of the aforementioned sheet was measured. The results are given in Table 2.

**Table 2**

| Measuring point | Base layer thickness A (µm) | Conductive layer thickness B (µm) | B/A |
|---|---|---|---|
| a | 31 | 20 | 0.6 |
| b | 35 | 21 | 0.6 |
| c | 32 | 18 | 0.6 |
| d | 34 | 20 | 0.6 |
| e | 30 | 22 | 0.7 |
| f | 26 | 28 | 1.1 |

### Practical Example 3

The procedure was the same as in Practical Example 1 except that a 0.65 mm thick PTFE sheet was used as sheet A, a 0.75 mm thick PTFE sheet containing carbon black was used as sheet B, and the thickness of the laminate of sheets A and B following calendering, (one time) was 0.25 mm.

Essentially no pinholes were found in the conductive layer of the resulting, laminated sheet. Part of the water vapor-permeable resin C was found to have penetrated into sheet B.

The thickness of the conductive layer and of the base layer at five points (points a through e) on the surface of the aforementioned sheet was measured. The results are given in Table 3.

**Table 3**

| Measuring, point | Base layer thickness A (µm) | Conductive layer thickness B (µm) | B/A |
|---|---|---|---|
| a | 22 | 22 | 1.0 |
| b | 37 | 14 | 0.4 |
| c | 35 | 16 | 0.5 |
| d | 22 | 25 | 1.1 |
| e | 20 | 40 | 2.0 |

### Comparative Example 1

The laminated sheet just before the addition of resin layer C obtained in Practical Example 1 was measured for peel strength, revealing a low value of 160 g/3 cm.

## Claims

1. An antistatic textile material comprising a layer B of expanded porous PTFE that contains a conductive substance, said layer being laminated on one side to a layer A of expanded, porous PTFE and being coated on the other side to a resin layer C that is resistant to penetration by liquid water but which is permeable to water vapor.

2. The material of claim 1 wherein a part of the resin is also present in the pores of layer B.

3. The material of claim 1 wherein a part of the resin is also present in the pores of layer B and of layer A.

4. The material of claim 1, 2 or 3 wherein the material is present in a clothing garment.
